# EUROPEAN PATENT SPECIFICATION

(11) **EP 0 449 105 B1**
(45) Date of publication and mention of the grant of the patent: **18.01.1995**
(21) Application number: 91104402.2
(22) Date of filing: 21.03.1991
(51) Int. Cl.: F16L 33/22, F16L 37/00

(54) **A hose pipe connector**
Schlauchkupplung
Raccord pour tuyau fexible

(30) Priority: 27.03.1990 IT 1982690
(43) Date of publication of application: 02.10.1991
(73) Proprietor: I.C.A.R. DI GUALA APRILE MARIA, I-13017 Quarona Sesia, Vercelli (IT)
(72) Inventor: Barberis, Arturo, I-13017 Quarona Sesia, Vercelli (IT)
(74) Representative: De Nova, Roberto

(56) References cited:
- AT-B- 338 576
- DE-A- 3 740 799
- DE-C- 2 906 026
- US-A- 458 038
- US-A- 1 509 484
- US-A- 4 313 628

## Description

This invention relates to a hose pipe connector as set forth in the pre-characterizing part of Claim 1 (US-A-4 313 628).

A large variety of hose pipe connectors are known in the art. A widely used approach provides a tubular body, which may have a saw-tooth profile, and associated nut, also referred to as the "cap". The hose pipe is fitted over the tubular body and secured fixedly thereon by means of a screw-tightened hose clamp, or alternatively, a sleeve collar which can be tightened around the hose through special jaw clamps.

In another embodiment, the hose pipe is fitted over the tubular body, having a nut or cap associated therewith, and a collar fitted, in turn, over the hose pipe. Using an expander tool, the tubular body is forced out against the hose pipe and its outward collar from the hose inside.

The above-described connectors are complicated, and to provide a tight connection, require careful handling.by the operator and the availability of special tools or equipment. In other words, they are expensive and awkward to install.

The underlying problem of this invention is to provide a hose pipe connector having such constructional and performance features as to obviate the aforesaid drawbacks.

This problem is solved by a hose pipe connector according to the characterizing part of Claim 1.

Further features and the advantages of the hose pipe connector according to this invention will become apparent from the following detailed description of a preferred embodiment thereof, given by way of illustration and not of limitation with reference to the accompanying drawings, where:
Figure 1 is a sectional view taken through a hose pipe connector according to the invention, showing it installed on a hose pipe for connection to a male fitting,
Figure 2 is an exploded view of the connector shown in Figure 1,
Figures 3 and 4 show the connector in Figure 1 at sequential stages of its installation on a hose pipe,
Figures 5, 6, 7 and 8 show a modified embodiment of the inventive connector for connection to a female fitting,
Figure 9 is an exploded sectional view of a modified embodiment of the inventive connector intended for connection to a male fitting, and
Figure 10 is an exploded sectional view of a further modification of the inventive connector intended for connection to a female fitting.

With reference to the accompanying drawing figures, generally shown at 1 is a hose pipe connector according to the invention as installed on hose pipe 2, such as a rubber or plastics hose, having an outside diameter D = 20 mm, inside diameter d = 15.5 mm, and a wall thickness s = 2.25 mm, it being intended for connection to a fitting, e.g. a male fitting or plug 3.

The connector 1 includes gripping members 4 adapted to be tightened on the hose 2.

The gripping members 4 comprise a conical inner sleeve 5 having a major outside diameter D1 = 17 mm, minor outside diameter D2 = 16 mm, and length L = 25 mm, thereby it has a relatively small amount of taper of about 2°.

The sleeve 5 has a flange 6 on the side of its major diameter, and a lead-in bevel 7 on the side of its minor diameter.

The sleeve 5 is preferably formed by deformation of a thin-walled metal pipe section having a wall thickness of 0.5 mm, for example.

The gripping members 4 also comprise a conical outer sleeve 8 having a major inside diameter D1 = 21.2 mm, minor inside diameter D2 = 20.2 mm, and length L = 25 mm, thereby it has a relatively small amount of taper of about 2°.

It should be noted that satisfactory results can also be obtained with tapers in the 1° to 6° range on both sleeves.

The outer sleeve 8 is fitted over the inner sleeve 5 coaxially therewith such that it will abut with its major diameter end against the flange 6 to define a gap 9 between said sleeves having a thickness S = 2.10 mm, smaller than the thickness s of the hose 2 and approximately equal to 93% of the hose thickness.

It should be noted that satisfactory results are also to be obtained with gap thicknesses in the 80% to 96% range of the hose thickness.

The outer sleeve 8 has a flange 10 on the side of its major diameter, and a collar 11 which defines a groove 12 in co-operation with the flange 10.

The sleeve 8 is preferably formed by deformation of a thin-walled metal pipe section having a wall thickness of 0.5 mm, for example, the collar 11 being provided by a corrugation on said pipe section.

The connector 1 comprises a threaded member 13, associated with said members 4, whereby it can be connected to the fitting 3.

In particular, the threaded member 13 is a nut 14 having an outer manipulation skirt 15, which may be either hexagonal or suitably knurled, a border 16 in locking engagement within the groove 12, an inside thread 17, and a groove 18 between the border 16 and the thread 17 for accommodating a sealing gasket 19 therein.

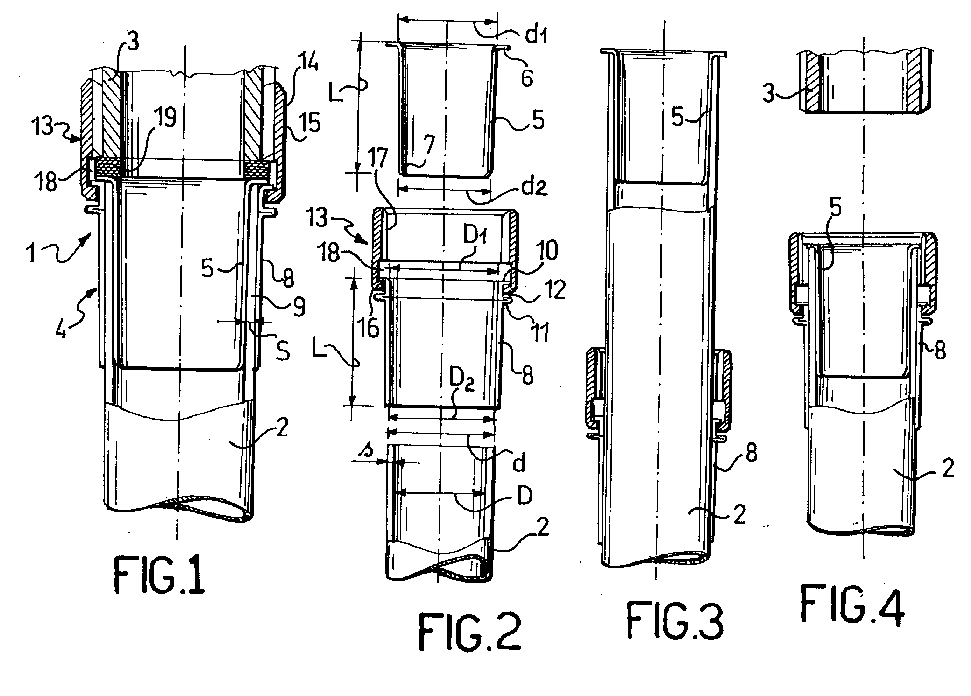

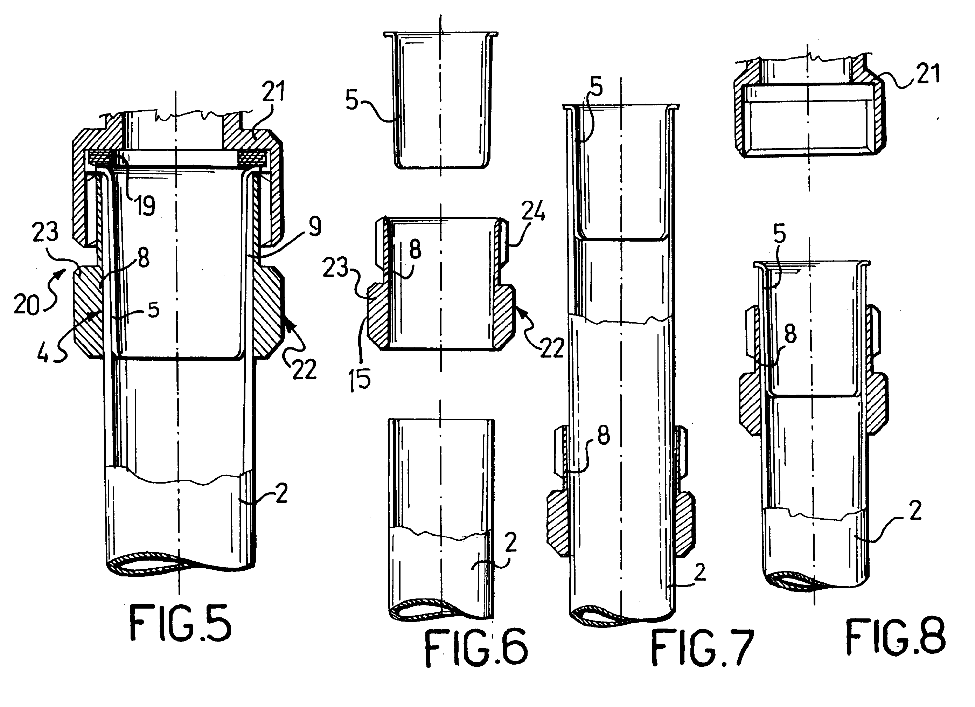

The connector 1 is installed on the hose 2 in its dismantled state (see Figure 2) by fitting the conical outer sleeve 8 over the hose 2 and sliding it down the hose some distance, thereafter the conical inner sleeve 5 is forced into the hose until the flange 6 abuts against the end of the hose 2 (see Figure 3). The conical outer sleeve 8 is then slid back up the hose 2 to bring it, manually at first, adjacent to the hose end (see Figure 4), and subsequently, by manipulating the fitting 3, to threadably engage the nut 14, with its flange 10 abutting the flange 6. Under this condition, the hose will be clamped in a predetermined compressive state within the gap 9. By removing the fitting 3 and inserting the gasket 19 into the groove 18, the connector installation on the hose pipe is completed, in readiness for connection to the fitting 3 (see Figure 1) as required.

A connector 20 is shown in Figures 5-8 wherein parts which are structurally and/or functionally similar to those of the connector 1 carry the same reference numerals, and are no further described herein.

The connector 20 is intended for connection to a female fitting 21 pre-assembled with a seal. To that aim, the connector 20 is provided with a threaded member 22 in the form of a tubular body 23 incorporating the conical outer sleeve 8, thereby forming the gap 9 with the conical inner sleeve 5, and formed externally with an integral outer manipulation skirt 15 and an outside thread 24.

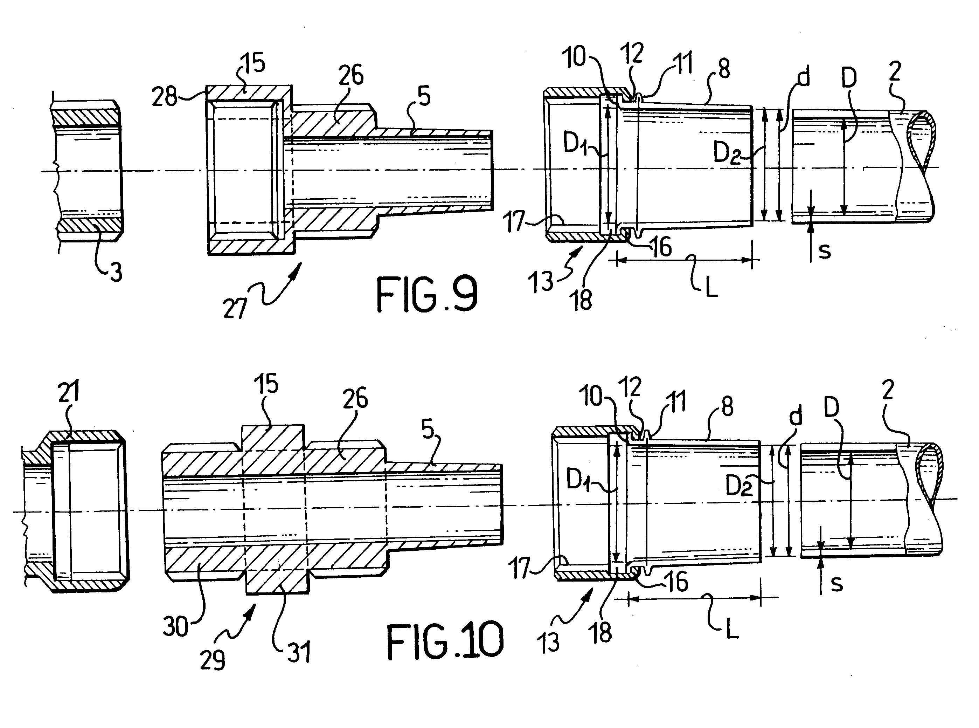

Its installation on the hose 2 is carried out (see Figures 6, 7) substantially in the same manner as described for the connector 1 using, during the final stage the female fitting 21 without the seal (see Figure 8). Thereupon, the connector is ready for connection to the fitting 21 complete with its seal (see Figure 5).

A modified embodiment of the invention will be now described with reference to Figure 9, where structurally and functionally similar parts to those described above are denoted by the same reference numerals and no further described herein below.

In this variation, the sleeve 5 is formed integrally with a first portion 26 of a nipple 27, said first portion constituting a male fitting adapted to receive the threaded member 13 in threaded relationship.

The nipple 27 has a second portion 28 constituting a female fitting. Through said second portion 28, the nipple 27 can be connected to the male fitting 3. Formed on the portion 28 is the skirt 15 for manipulating the nipple.

In a further variation, to be described with reference to Figure 10 where the same reference numerals are used to denote structurally and functionally similar parts, the sleeve 5 is formed integrally with a first portion 26 of a nipple 29, said first portion constituting a male fitting adapted to receive the threaded member 13 in threaded relationship.

The nipple 28 has a second portion 30 which constitutes a male fitting. Through said second portion 30, the nipple 28 can be connected to the female fitting 21. The nipple 29 has, between the first portion 26 and the second portion 30, an intermediate portion 31 on which the skirt 15 for manipulating the nipple is formed.

A major advantage of a connector according to this invention resides in its constructional simplicity, the ability to have it manufactured at very fast rates on automated equipment, and the very low weight of its component parts, which qualities reflect on the whole in a low overall cost.

A further advantage is that it can be installed on the hose pipe readily and without using any special equipment, but rather utilizing other standrd design fittings like the very fittings with which it is to co-operate.

An additional advantage is that, because of the thin wall of the inner sleeve, it will leave the hose flow cross-section virtually unchanged, that is with no undesired local necking-ins.

Because of the thin walled inner sleeve, the latter can be readily formed with approximately saw-tooth corrugations or slight undulations or the like to enhance its tight attachment to the hose pipe.

Actual tests have shown, moreover, that the connector of this invention can withstand, without damage and leaking, pressure peaks several atmospheres above its normal operating pressure.

Finally, this connector also has an aesthetically appealing appearance, a non-negligible advantage for an article which would be often installed at exposed locations.

In addition, the modified embodiments wherein the inner sleeve is formed integrally with the nipple affords the added advantage of an improved and more reliable performance of the connector through the elimination of a seal.

## Claims

1. An assembly comprising a hose pipe (2) and a connector (1) of the type which comprises gripping members (4) adapted to be tightened around the hose (2) and a threaded member (13,22) associated with said members (4) and adapted to be connected threadably to a fitting (3, 21), said gripping members (4) comprising a conical inner sleeve (5) having a flange (6) on its major diameter end and a conical outer sleeve (8) fitted over the inner sleeve (5), a gap (9) being defined between said sleeves (5,8) which has a smaller thickness than the hose (2) own thickness, said threaded member (13) being associated with the outer sleeve (8), characterized in that the outer sleeve (8) comes in abutment relationship with said flange (6), when the connector is assembled.

2. An assembly according to Claim 1, characterized in that the conical inner sleeve (5) and the conical outer sleeve (8) have a taper angle in the 1° to 6° range, preferably of 2°.

3. An assembly according to Claim 2, characterized in that the gap (9) has a thickness dimension within the range of 80% to 96% of the hose (2) own thickness, preferably a thickness dimension which is 93% of the hose thickness.

4. An assembly according to Claim 1, characterized in that said inner sleeve (5) is a section of thin-walled pipe deformed to provide the taper and the flange (6) at the major diameter end.

5. An assembly according to Claim 1, characterized in that said inner sleeve (5) is formed integrally with a first portion (26) of a nipple (27,29), said portion (26) constituting a male fitting for the threaded member (13).

6. An assembly according to Claim 5, characterized in that said nipple (27) has a second portion (28) constituting a female fitting for threaded connection to a male fitting (3).

7. An assembly according to Claims 5, characterized in that said nipple (29) has a second portion (30) constituting a male fitting for threaded connection to a female fitting (21).

8. An assembly according to Claim 1, characterized in that said threaded member (13) is a nut (14) having a border (16) in locking engagement within a groove (12) formed in the outer sleeve (8) and an inside thread (17) for its threaded connection to a male fitting (3).

9. An assembly according to Claim 9, characterized in that the outer sleeve (8) is a section of a thin-walled pipe deformed to provide the taper, the flange (10) at the major diameter end, and a collar (11) a short distance away from the flange (10) thereby defining said groove (12).

10. An assembly according to Claim 1, characterized in that said threaded member (22) is a tubular body (23) incorporating the conical outer sleeve (8) and being provided externally with a skirt (15) for its manipulation and an outside thread (24) for its threaded connection to a female fitting (21).

## Patentansprüche

1. Anordnung mit einer Schlauchleitung (2) und einem Schlauchverbinder (1), der den Schlauch (2) umfassende festziehbare Greifelemente (4) und ein den Greifelementen (4) zugeordnetes Gewindeteil (13,22) aufweist, das mit einem mit Gewinde versehenen Anschlußstück (3,21) verschraubbar ist, wobei die Greifelemente (4) ein konisches inneres Hülsenteil (5) mit einem Flansch (6) an seinem größeren Durchmesser und ein über das innere Hülsenteil (5) gesetztes konisches äußeres Hülsenteil (8) aufweisen, wobei zwischen den Hülsenteilen (5,8) ein Zwischenraum (9) definiert ist, der von geringerer Dicke ist als die Eigendicke des Schlauches (2), wobei das Gewindeteil (13) dem äußeren Hülsenteil (8) zugeordnet ist, dadurch gekennzeichnet, daß das äußere Hülsenteil (8) beim Zusammenbauen des Schlauchverbinders in Anlage an den Flansch (6) gelangt.

2. Anordnung nach Anspruch 1, dadurch gekennzeichnet, daß das konische innere Hülsenteil (5) und das konische äußere Hülsenteil (8) einen Konuswinkel im Bereich von 1° bis 6°, vorzugsweise von 2°, aufweisen.

3. Anordnung nach Anspruch 2, dadurch gekennzeichnet, daß der Zwischenraum (9) eine Dickenabmessung im Bereich von 80% bis 96% der Eigendicke des Schlauches (2) aufweist, vorzugsweise eine Dickenabmessung, die 93% der Schlauchdicke beträgt.

4. Anordnung nach Anspruch 1, dadurch gekennzeichnet, daß die innere Muffe (5) ein Abschnitt eines dünnwandigen Rohres ist, der zur Bildung der konischen Form und des Flansches (6) an dem Ende mit dem größeren Durchmesser verformt ist.

5. Anordnung nach Anspruch 1, dadurch gekennzeichnet, daß das innere Hülsenteil (5) mit einem ersten Teil (26) einer Schlauchverschraubung (27,29) einstückig ausgebildet ist, wobei der Teil (26) ein männliches Anschlußstück für das Gewindeteil (13) bildet.

6. Anordnung nach Anspruch 5, dadurch gekennzeichnet, daß die Schlauchverschraubung (27) einen zweiten Teil (28) aufweist, der ein weibliches Anschlußstück zum Verschrauben mit einem männlichen Anschlußstück (3) bildet.

7. Anordnung nach Anspruch 5, dadurch gekennzeichnet, daß die Schlauchverschraubung (29) einen zweiten Teil (30) aufweist, der ein männliches Anschlußstück zum Verschrauben mit einem weiblichen Anschlußstück (21) bildet.

8. Anordnung nach Anspruch 1, dadurch gekennzeichnet, daß das Gewindeteil (13) ein Gewindering (14) mit einem Bund (16) in Verriegelungseingriff in einer in dem äußeren Hülsenteil (8) ausgebildeten Nut (12) und mit einem Innengewinde (17) zum Verschrauben mit einem männlichen Anschlußstück (3) ist.

9. Anordnung nach Anspruch 1, dadurch gekennzeichnet, daß das äußere Hülsenteil (8) ein Abschnitt eines dünnwandigen Rohres ist, der zur Bildung der konischen Form, des Flansches (10) an dem Ende mit dem größeren Durchmesser und eines Kragens (11) in geringem Abstand von dem Flansch (10) verformt ist, wodurch die Nut (12) gebildet ist.

10. Anordnung nach Anspruch 1, dadurch gekennzeichnet, daß das Gewindeteil (22) ein rohrförmiger Körper (23) ist, in den das konische äußere Hülsenteil (8) integriert ist, und der außen mit einem Griffrand (15) und einem Außengewinde (24) zum Verschrauben mit einem weiblichen Anschlußstück (21) versehen ist.

## Revendications

1. Ensemble comprenant un tube flexible (2) et un connecteur (3), du type comprenant des organes de saisie (4) adaptés pour être serrés autour du tube (2) et un organe fileté (13,22), associé auxdits organes (4) et adapté pour être relié, par son filetage, à un raccord (3,21), lesdits organes de saisie (4) comprenant un manchon intérieur conique (5) ayant une bride sur son extrémité de grand diamètre et un manchon extérieur conique (8) monté sur le manchon intérieur (5), un interstice (9) d'épaisseur inférieure à l'épaisseur propre du tube (2) étant défini entre lesdits manchons (5,8), ledit organe fileté (13) étant associé audit manchon extérieur (8), caractérisé en ce que le manchon extérieur (8) vient en butée sur ladite bride (6) lorsque le connecteur est assemblé.

2. Ensemble selon la revendication 1, caractérisé en ce que le manchon intérieur conique (5) et le manchon extérieur conique (8) ont un angle de cône situé dans la plage de 1° à 6°, valant de préférence 2°.

3. Ensemble selon la revendication 2, caractérisé en ce que l'interstice (9) est d'une dimension située dans la plage de 80 % à 96 % de l'épaisseur propre du tuyau, de préférence ayant une dimension de 93 % de l'épaisseur du tube.

4. Ensemble selon la revendication 1, caractérisé en ce que ledit manchon intérieur (5) est une section de tube à paroi mince, déformé pour produire le cône et la bride (6) à son extrémité de grand diamètre.

5. Ensemble selon la revendication 1, caractérisé en ce que ledit manchon intérieur (5) est formé d'un seul tenant d'une première partie (26) d'une tubulure (27,29), ladite partie (26) constituant un raccord mâle pour l'organe fileté (13).

6. Ensemble selon la revendication 5, caractérisé en ce que ladite tubulure (27) a une deuxième partie (28) constituant un raccord femelle pour une liaison filetée avec un raccord mâle (3).

7. Ensemble selon la revendication 5, caractérisé en ce que ladite tubulure (29) a une deuxième partie (30) constituant un raccord mâle pour une liaison filetée avec un raccord femelle (21).

8. Ensemble selon la revendication 1, caractérisé en ce que ledit organe fileté (13) est un écrou (14) ayant un rebord (16) en contact de verrouillage à l'intérieur d'une gorge (12) formée dans le manchon extérieur (8) et un filet intérieur (17), destiné à sa liaison filetée à un raccord mâle (3).

9. Ensemble selon la revendication 8, caractérisé en ce que le manchon extérieur (8) est une section de tuyau à paroi mince déformée pour constituer le cône, la bride (10) à l'extrémité à grand diamètre, et une collerette (11) à une courte distance de la bride (10), de manière à définir ladite gorge (12).

10. Ensemble selon la revendication 1, caractérisé en ce que ledit organe fileté (22) est un corps tubulaire (23) incorporant le manchon extérieur conique (8) et pourvu extérieurement d'une jupe (15) destinée à sa manipulation et d'un filet extérieur (24), pour sa liaison filetée à un raccord femelle (21).
